# FASCICULE DE BREVET EUROPEEN

(11) **EP 3 044 482 B1**
(45) Date de publication et mention de la délivrance du brevet: **04.10.2017**
(21) Numéro de dépôt: 14747086.8
(22) Date de dépôt: 09.07.2014
(51) Int. Cl.: F16H 61/02, F16H 59/72, F16H 57/04, F16H 59/50

(54) **PROCÉDÉ ET SYSTÈME DE COMMANDE D' UNE BOITE DE VITESSES AUTOMATIQUE**
VERFAHREN UND SYSTEM ZUR STEUERUNG EINES AUTOMATISCHEN GETRIEBES
METHOD AND SYSTEM FOR CONTROLLING AN AUTOMATIC TRANSMISSION

(30) Priorité: 13.09.2013 FR 1358851
(43) Date de publication de la demande: 20.07.2016
(73) Titulaire: Renault S.A.S., 92100 Boulogne-Billancourt (FR)
(72) Inventeur: RIESENMEY, Fabrice, F-91780 Chalo Saint Mars (FR); BAURIN, Claude, F-62131 Drouvin le Marais (FR)
(86) Numéro de dépôt international: PCT/FR2014/051763
(87) Numéro de publication internationale: WO 2015/036664

(56) Documents cités:
- JP-A- 2000 179 661
- US-A1- 2008 132 380
- US-A1- 2009 036 268

## Description

L'invention a pour domaine technique la commande de réducteurs de vitesse à commande hydraulique, notamment la commande de tels réducteurs dans une boite de vitesses automatique.

Une boite de vitesse automatique (BVA) peut être utilisée par les groupes motopropulseurs de véhicules automobiles, quadricycle, tricycle ou motocycle à moteur thermique, hydraulique ou électrique dont la transmission de mouvement est assurée par un réducteur de vitesse comportant un système hydraulique.

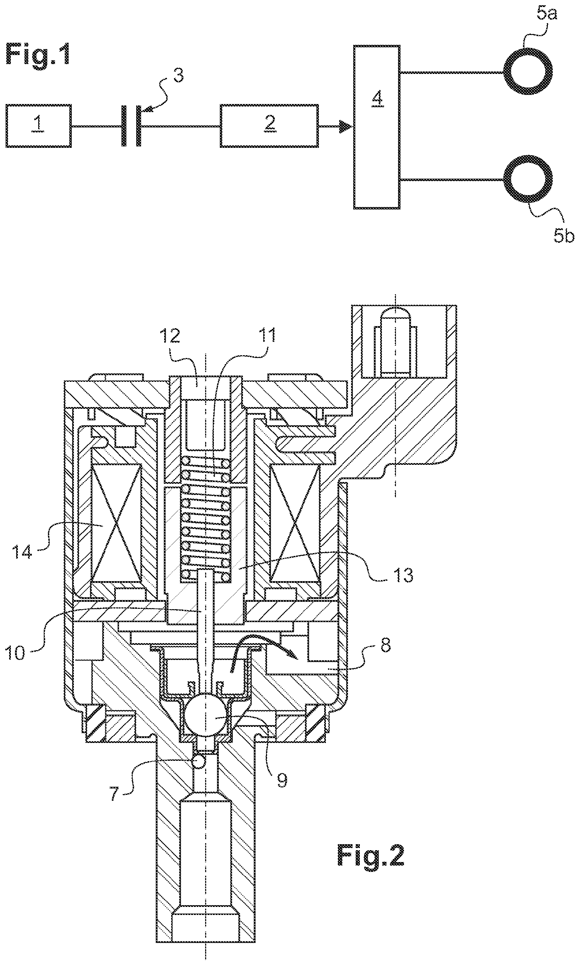

Une boite de vitesses à contrôle automatisé, également appelée boite de vitesses automatique, selon l'état de l'art antérieur, est illustrée par la figure 1. On peut voir un moteur ou groupe motopropulseur 1 relié à un réducteur de vitesse 2 par l'intermédiaire d'un convertisseur 3, le réducteur de vitesse 2 étant relié aux roues motrices 5a et 5b par l'intermédiaire d'un différentiel 4 comprenant des embrayages et freins hydrauliques.

La boite de vitesses automatique comprend ainsi le réducteur de vitesse 2, le coupleur/convertisseur hydraulique 3 assurant la liaison entre le moteur 1 et le réducteur de vitesse 2 et permettant la transmission de la puissance aux roues motrices 5a et 5b, et les embrayages et freins à commande hydraulique ainsi qu'un système hydromécanique pilotant ces embrayages et freins.

Selon l'architecture du réducteur de vitesse, les rapports de vitesses peuvent être de type discret ou continu. Quel qu'en soit le mode, la commande de ces rapports est assurée grâce à la mise sous pression de composants hydrauliques tels que les vérins, embrayages et freins décrits ci-dessus.

Les vérins hydrauliques permettent dans le cas d'une transmission infiniment variable de gérer la poussée sur les éléments assurant la réduction de vitesse.

Les embrayages hydrauliques permettent de rendre moteur un élément du train épicycloïdal. Les freins hydrauliques solidarisent au carter un ou plusieurs éléments du train, permettant de créer un point de réaction ou un levier.

Lors de la commande des rapports de vitesses, tout ou partie des vérins, embrayages et freins sont alimentés pour mise en pression ou vidangés.

Un embrayage ou frein hydraulique comportant un système de friction à plusieurs disques est capable de transmettre un couple moteur dans la mesure où la force exercée sur la surface du piston de commande est suffisante.

Un vérin hydraulique d'un système de commande de rapport infiniment continu est capable de transmettre un couple moteur dans la mesure où la force exercée sur la surface du piston de commande est suffisante.

Un frein hydraulique monobande ou à bandes multiples est capable de transmettre un couple moteur dans la mesure où la force exercée sur la surface du piston de commande est suffisante.

Dans ces trois cas, la force de commande est générée par l'action de la pression hydraulique.

Dans tous les cas, la précision de la pression hydraulique appliquée à chaque organe est déterminante dans la précision du couple moteur à transmettre. La moindre chute de pression accidentelle, occasionne une dissipation d'énergie par glissement relatif, ce qui à très court terme engendre des dégradations des différents organes.

La fourniture en pression est donc d'une importance déterminante sur la fonctionnalité et sur la tenue mécanique des composants.

Afin de moduler la pression hydraulique générée par une pompe, on emploie une électrovanne de modulation telle qu'illustrée par la figure 2. On peut voir qu'elle comprend:
- un corps qui regroupe les différents éléments de commande et, est fixé sur un distributeur hydraulique,
- une arrivée d'huile 7,
- une sortie d'huile 8,
- une bille 9 obturant l'arrivée d'huile,
- une aiguille 10 qui contraint la bille 9 en position fermée,
- un ressort de rappel 11 qui contraint l'aiguille 10,
- un bouchon de calibration 12 qui règle la force de contrainte du ressort 11,
- un noyau 13 qui contraint par son déplacement le ressort de rappel 11, et
- un bobinage électromagnétique 14 qui commande par champ magnétique le déplacement du noyau 13.

Il apparait ainsi que le contrôle de l'obturation de l'arrivée d'huile, ou de liquide hydraulique, permet de faire évoluer finement un potentiel de puissance hydraulique (pression/débit) au sein des réseaux hydrauliques à piloter.

L'électrovanne de modulation est une électrovanne battante à fréquence constante commandée par un courant électrique d'appel et un courant de maintien à rapport cyclique variable appelé T/On délivré par le calculateur. Ce rapport cyclique est directement lié au niveau de pression souhaité et aux caractéristiques hydromécaniques de l'électrovanne de modulation.

On rappelle que le courant d'appel est un courant permettant de générer un champ magnétique suffisamment important pour faire bouger le noyau de sa position de repos vers sa position de travail.

Le courant de maintien est un courant permettant de générer un champ magnétique apte à maintenir le noyau dans sa position de travail. Il apparait ainsi que la force électromagnétique générée par le courant d'appel doit être significativement supérieure à la force de rappel du ressort, tandis que la force électromagnétique générée par le courant de maintien doit être sensiblement égale à la force de rappel du ressort. Le courant d'appel est donc supérieur au courant de maintien.

La commande de l'électrovanne de modulation permet par effet de levier hydraulique de contrôler la position d'un tiroir de régulation sous l'effet d'une puissance hydraulique gérée par l'électrovanne de modulation.

Sur un cycle (période), lorsque le bobinage est alimenté, la bille du clapet est attirée sous l'action du champ magnétique du bobinage dans le sens de l'augmentation de pression. Quand le bobinage n'est pas alimenté, la bille du clapet est entrainée dans le sens de diminution de la pression sous l'action du ressort de rappel.

En d'autres termes, le noyau se déplace en contraignant le ressort de rappel sous l'effet du champ magnétique généré par le bobinage. Ce déplacement est possible car la force générée par le champ magnétique est supérieure à la force de tarage du ressort de rappel.

La compression du ressort libère la contrainte de l'aiguille délestant ainsi la bille d'étanchéité et permettant au flux d'huile un retour vers le circuit de décharge à la pression atmosphérique.

La position obtenue, et donc la pression, dépend du rapport cyclique d'ouverture c'est-à-dire le rapport entre le pourcentage du temps d'alimentation du bobinage et le pourcentage du temps de non alimentation. Le courant de commande est haché afin de limiter la dissipation d'énergie.

La commande de l'électrovanne de modulation peut faire évoluer la valeur T/On entre 0% et 100%. Lorsque la valeur T/On est égale à 0 %, on obtient, en final du réseau, la pression maximale délivrée par la pompe hydraulique

Lorsque la valeur T/On est égale à 100 %, on obtient, en final du réseau, la pression minimale ajustée par la vanne de régulation de pression.

Par ce procédé de commande, un réseau hydraulique est alors soumis à des niveaux de pression dits « bas » évoluant pour la démonstration de 0 à 3 bars. Ce potentiel de pression permet par effet de levier hydraulique, de gérer le déplacement d'une vanne régulatrice principale de pression. Par « effet de levier hydraulique », on entend le fait de commander via une faible pression la face active d'un tiroir. Sous l'effet de cette force, le tiroir se déplace et permet une fuite ou une alimentation sous haute pression d'un réseau hydraulique annexe de puissance. Il y a donc dans ce cas un réseau de commande géré par l'électrovanne de modulation et un réseau de puissance géré par la position du tiroir régulateur, et alimentant les différents organes hydrauliques.

Des hauts niveaux de puissance peuvent être obtenues et évoluer, pour la démonstration, entre 0 et 23 bars, ce qui permet l'exploitation directe de l'énergie hydraulique par les vérins ou autres consommateurs.

Toutefois, lorsque le système a macéré plusieurs heures dans une ambiance climatique très froide (par exemple, inférieure à -15°C), la viscosité de l'huile augmente les pertes de charges à l'intérieur même de l'électrovanne de modulation, mais colle aussi le noyau en position initiale de repos. Cette position génère alors, via le levier hydraulique décrit ci-dessus, une demande de pression maximale. Le fonctionnement de l'électrovanne de modulation (EVM) de pression hydraulique est ainsi compromis par l'accrochage de son noyau piloté. La réponse de l'électrovanne ne suit pas la consigne demandée. Il est à noter que la température de cristallisation du lubrifiant dépend de sa qualité.

Malgré une consigne de pression minimale (ce qui correspond à un signal à 100 % de la valeur T/On dans l'exemple ci-dessus) du procédé de commande, le système de commande reste collé en position de repos. De ce fait, la pression délivrée n'est pas du tout en rapport avec la consigne et tend vers de forts niveaux. Cet état non maitrisé peut durer quelques secondes mais a un impact notoire sur la qualité de démarrage du moteur et le dimensionnement des composants en rapport avec les mises en action à froid (démarreur, câblages, batterie). De plus, une telle situation ne peut être corrigée par une boucle d'asservissement, l'électrovanne de modulation étant physiquement collée. Le problème n'est donc pas une consigne erronée, mais l'incapacité physique de réaliser une commande.

Dans la phase dynamique, lors de la mise en action d'un véhicule dans ce contexte, la pression nécessaire aux différents organes hydrauliques devient inférieure ou supérieure aux besoins. Il en résulte soit un déficit ou un surplus d'énergie hydraulique qui peut générer des disfonctionnement des organes hydrauliques.

En effet, la pression au sein de ces organes étant différente du besoin réel, il peut y avoir endommagement des points les plus sensibles.

En pratique, cela se caractérise par la présence de glissements ou des chocs à la mise sous pression des organes hydrauliques de la chaine cinématique pouvant aller jusqu'à l'arrêt total de la boite de vitesses automatique malgré la sollicitation du conducteur.

Ceci entraîne également une contrainte supplémentaire lors du démarrage moteur et une perturbation de la régulation de ralenti moteur dès le démarrage

Ces contraintes présentent un impact direct sur le bilan consommation/pollution lors de la mise en action de l'électrovanne de modulation dans une ambiance climatique très froide.

D'une manière générale, un système de commande d'une transmission est généralement fondé sur le principe de la réalisation d'une consigne déterminée par le calcul en fonction des conditions de fonctionnement du véhicule. En cas de non respect de cette consigne, un système de correction est appliqué afin de forcer la réalisation de la consigne calculée en modifiant les commandes émises. En cas de divergence extrême, le système de commande passe dans un mode de fonctionnement moins contraint, dit commande en mode dégradé.

Les contraintes liées au collage à froid des électrovannes de modulation des organes hydrauliques d'une boite de vitesses automatique ne semblent pas avoir fait l'objet d'études. Généralement, les composants mécaniques font l'objet d'un surdimensionnement leur assurant une résistance mécanique accrue en contrepartie d'un cout et d'un encombrement également accru.

De l'état de la technique, on connait les documents suivants.

Le document US20020103591 décrit une méthode de contrôle de solénoïde et un dispositif pour transmission automatique.

Le document JP2011004103 décrit une méthode d'estimation du courant pour un solénoïde, un dispositif de commande de transmission automatique et un dispositif de commande de freinage.

Le document JP2001114182 décrit une transmission automatique pour bicyclette. Le document US 2008/0132380 décrit un procédé de commande d'une boite de vitesses automatique de véhicule automobile, comprenant au moins une électrovanne de modulation disposée dans un circuit hydraulique, le procédé déterminant si une mesure de température au voisinage des électrovannes de modulation est inférieure à un seuil de température, et si le démarrage du groupe motopropulseur du véhicule est imminent. Si tel est le cas, le procédé émet une commande d'activation à destination des électrovannes de modulation apte à générer un dégagement d'énergie autour de l'électrovanne de modulation. Il existe un besoin pour un procédé de commande d'une boite de vitesses automatique tenant compte des phénomènes de collage des électrovannes de modulation à basse température.

Un objet de l'invention est un procédé de commande d'une boite de vitesses automatique de véhicule automobile, comprenant au moins une électrovanne de modulation disposée dans un circuit hydraulique. Le procédé de commande comprend les étapes suivantes :
on détermine si une mesure de température au voisinage des électrovannes de modulation est inférieure à un seuil de température, et si le démarrage du groupe motopropulseur du véhicule est imminent,
si tel est le cas, on émet une commande d'activation à destination des électrovannes de modulation apte à générer un dégagement d'énergie autour de l'électrovanne de modulation puis à l'actionner afin de dégager également de l'énergie par frottements mécaniques, puis
on commande l'arrêt de la commande d'activation dès que l'on détermine la mise en route du groupe motopropulseur.

La commande d'activation peut comprendre un courant d'appel suivi d'un courant de maintien, l'intensité du courant de maintien étant égale à l'intensité du courant d'appel.

On peut déterminer que le démarrage du groupe motopropulseur est imminent en détectant au moins l'un parmi l'ouverture de la portière du conducteur, le déverrouillage de la condamnation centralisée, et la détection de la présence d'un individu installé dans le siège conducteur au moyen de capteurs, tels qu'une cellule photosensible, un capteur volumétrique, un capteur infrarouge, ou un capteur de poids intégré au siège.

On peut interrompre la commande d'activation si la durée écoulée depuis l'émission de la commande d'activation des électrovannes de modulation est supérieure à un seuil et que le groupe motopropulseur n'a pas été démarré.

On peut déterminer la mise en route du groupe motopropulseur en comparant au moins un paramètre de fonctionnement du groupe motopropulseur à un seuil, notamment en comparant la vitesse de rotation du groupe motopropulseur à un seuil

Pour déterminer la température au voisinage des électrovannes de modulation, on peut mesurer la température du liquide hydraulique présent dans le circuit hydraulique ou la température extérieure au véhicule.

Un autre objet de l'invention est un système de commande d'une boite de vitesses automatique de véhicule automobile, comprenant au moins une électrovanne de modulation disposée dans un circuit hydraulique. Le système comprend un moyen de détermination de conditions climatiques extrêmes, apte à comparer une mesure de température au voisinage des électrovannes de modulation à un seuil, un moyen de détermination de l'imminence d'un démarrage du groupe motopropulseur du véhicule, apte à déterminer que le groupe motopropulseur va être démarré en fonction d'au moins un signal d'un capteur, un moyen de commande des électrovannes de modulation relié en entrée au moyen de détermination de conditions climatiques extrêmes et au moyen de détermination de l'imminence d'un démarrage du groupe motopropulseur, apte à émettre un signal de commande modulé par un rapport cyclique, comprenant un courant d'appel suivi d'un courant de maintien, apte à générer un dégagement d'énergie autour de l'électrovanne de modulation puis à l'actionner afin de dégager également de l'énergie par frottements mécaniques, et un moyen de désactivation apte à déterminer que le groupe motopropulseur est démarré et apte, lorsque tel est le cas, à désactiver le moyen de commande de l'activation des électrovannes de modulation.

Le moyen de commande des électrovannes de modulation peut également être apte à fixer les intensités du courant d'appel et du courant de maintien à un niveau commun.

Le signal permettant la détermination de l'imminence d'un démarrage du groupe motopropulseur du véhicule peut être fourni par un capteur d'au moins l'un parmi l'ouverture de la porte du conducteur, le déverrouillage de la condamnation centralisée des portes du véhicule, et la détection de la présence d'un individu installé dans le siège du conducteur, le capteur permettant de détecter la présence d'un individu installé dans le siège conducteur étant une cellule photosensible, un capteur volumétrique, un capteur infrarouge, ou un capteur de poids intégré au siège.

Le moyen de désactivation peut également être apte à désactiver le moyen de commande de l'activation des électrovannes de modulation lorsque la durée écoulée depuis le début de l'émission de la commande d'activation des électrovannes de modulation est supérieure à un seuil et que le groupe motopropulseur n'a pas été démarré.

La température au voisinage des électrovannes de modulation peut être déterminée par un capteur de température du liquide hydraulique présent dans le circuit hydraulique ou en fonction de la mesure d'un capteur de température extérieure au véhicule.

Un tel système de commande présente de multiples avantages, au niveau économique, au niveau de la fiabilité mécanique, au niveau de la prestation, et au niveau de la sécurité.

L'avantage économique se manifeste par une maîtrise de la consommation en carburant et des émissions de polluants lors de la mise en action à froid.

Lors des sollicitations quotidiennes à basse température, les composants sont voués à se dégrader. Le système de commande permet une gestion améliorée du fluide hydraulique lors de chaque mise en route du système, ce qui préserve en premier lieu les différents éléments le constituant. D'autre part, le système de commande permet d'assurer que les systèmes consommateur d'énergie hydraulique sont alimentés avec le niveau de pression désiré. Dans les deux cas, le système de commande présente l'avantage d'améliorer la fiabilité mécanique du véhicule.

Le système de commande présente l'avantage de permettre le fonctionnement d'un boite de vitesse automatique dans une large gamme de températures et donc de climats, favorisant ainsi la commercialisation dans un plus grand nombre de pays.

D'autres buts, caractéristiques et avantages apparaîtront à la lecture de la description suivante donnée uniquement en tant qu'exemple non limitatif et faite en référence aux dessins annexés sur lesquels :
- la figure 1 illustre un véhicule muni d'une boite de vitesses automatique,
- la figure 2 illustre les principaux éléments d'une électrovanne de modulation,
- la figure 3 illustre les principales étapes d'un procédé de commande selon l'invention, et
- la figure 4 illustre les principaux composants d'un système de commande selon l'invention.

Le décollage de la bille de l'électrovanne de modulation et la décristallisation locale de l'huile impliquent la dissipation localisée d'énergie thermique apte à contrecarrer l'effet des basses températures. Pour cela, on utilise le bobinage de commande du noyau pour générer de l'énergie thermique d'abord directement par effet Joule, puis par le biais des frottements mécaniques en actionnant de façon répétée le noyau et l'aiguille de l'électrovanne de modulation.

Cependant, cet apport localisé d'énergie thermique et d'énergie mécanique ne peut être réalisé qu'avant le démarrage du véhicule, faute de quoi la régulation de l'énergie hydraulique du véhicule ne pourrait se faire.

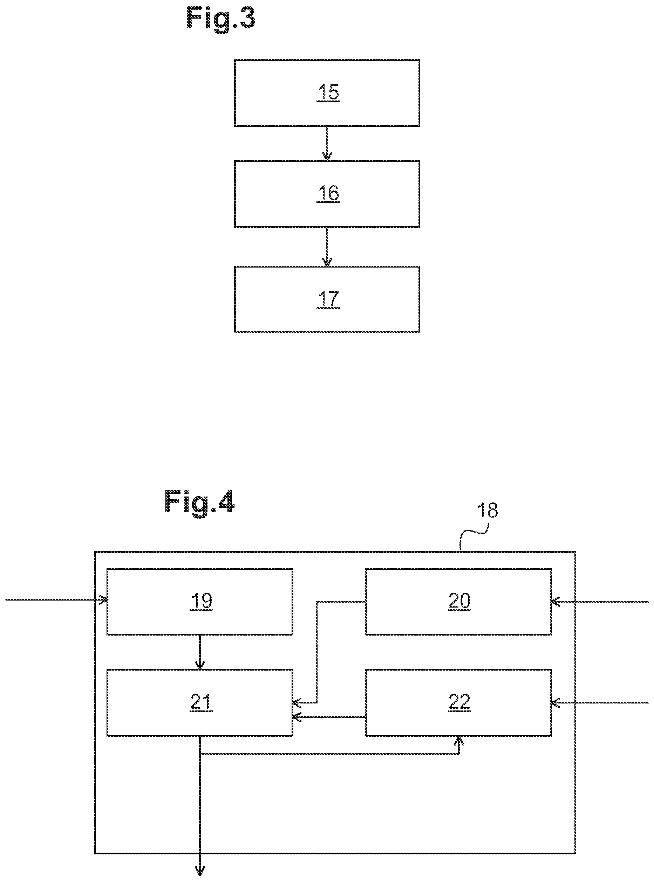

Ainsi, le procédé de commande, illustré par la figure 3, comprend une première étape 15 au cours de laquelle on détermine l'occurrence de conditions climatiques critiques, par exemple par l'intermédiaire d'un capteur de température apte à déterminer la température du fluide hydraulique ou de la température extérieure.

Par ailleurs, l'apport d'énergie thermique et mécanique devant être réalisé avant le démarrage du groupe motopropulseur, la commande de l'électrovanne de modulation doit être réalisée avant que le groupe motopropulseur ne soit démarré. Pour cela, le procédé de commande comprend une étape au cours de laquelle on détermine l'imminence d'un démarrage du groupe motopropulseur par l'intermédiaire de la détection soit l'ouverture de la portière du conducteur, soit le déverrouillage de la condamnation centralisée, soit la présence d'un individu installé dans le siège conducteur au moyen de capteurs, par exemple une cellule photosensible, un capteur volumétrique, un capteur infra rouge, un capteur de poids dans le siège conducteur ou tout autre moyen matériel. Si les deux conditions sont vérifiées, le procédé se poursuit par une deuxième étape.

Au cours de la deuxième étape 16, on commande le noyau de l'électrovanne de modulation avec une commande d'activation permettant un dégagement d'énergie thermique et mécanique. La commande d'activation correspond à au rapport cyclique de modulation lié à T/On présenté en introduction.

En d'autres termes, la commande d'activation est réalisée de telle manière qu'il y ait une génération d'énergie dans le bobinage par effet Joule, et par frottements mécaniques suivie d'une dissipation de cette énergie dans le fluide hydraulique au voisinage de l'électrovanne de modulation. Il est ainsi possible de dissiper un maximum d'énergie dans l'environnement du noyau et de liquéfier le fluide hydraulique circulant au travers du noyau de l'électrovanne de modulation.

En complément de la commande d'activation, on modifie l'intensité des courants de maintien afin qu'elle soit égale à l'intensité des courants d'appel. Ce procédé permet de dissiper une quantité d'énergie supplémentaire dans l'environnement de l'électrovanne de modulation.

Par ailleurs, il est nécessaire de protéger l'électrovanne de modulation du grippage, dans le cas de la détection d'une présence dans le véhicule qui n'est pas suivie du démarrage du groupe motopropulseur. Le procédé de commande comprend ainsi une étape de détermination de la durée écoulée depuis l'émission de la commande d'activation. Si cette durée devient supérieure à un seuil, la commande d'activation est arrêtée. Le seuil est fixé à une valeur suffisamment importante, de l'ordre de quelques minutes, permettant de différencier une entrée dans le véhicule sans volonté de démarrer le groupe motopropulseur, d'une entrée dans le véhicule avec volonté de démarrer le groupe motopropulseur.

Le procédé de commande se poursuit par une troisième étape 17 au cours de laquelle on commande la mise en route du groupe motopropulseur. Dès la mise en route du groupe motopropulseur, la commande d'activation est stoppée afin de rendre l'électrovanne de modulation disponible pour la commande de la boite de vitesses automatique. La mise en route du groupe motopropulseur peut être déterminée par la comparaison d'au moins un paramètre de fonctionnement du groupe motopropulseur à un seuil, notamment en comparant la vitesse de rotation du groupe motopropulseur à un seuil.

Sur la figure 4, on peut voir un système de commande 18 d'une boite de vitesses automatique comprenant au moins une électrovanne de modulation.

Le système de commande 18 comprend un moyen 19 de détermination de conditions climatiques extrêmes, apte à comparer une mesure de température à un seuil. La mesure de température peut être fournie par un capteur de température du liquide hydraulique ou par un capteur de température extérieure au véhicule.

Le système de commande 18 comprend également un moyen 20 de détermination de l'imminence d'un démarrage du groupe motopropulseur du véhicule, apte à déterminer que le groupe motopropulseur va être démarré en fonction de la détection par un capteur d'au moins l'un parmi l'ouverture de la porte du conducteur, le déverrouillage de la condamnation centralisée des portes du véhicules, et la détection de la présence d'un individu installé dans le siège du conducteur. Une cellule photosensible, un capteur volumétrique, un capteur infrarouge, ou un capteur de poids intégré au siège peuvent être employés pour détecter la présence d'un individu installé dans le siège conducteur.

Le système de commande 18 comprend un moyen 21 de commande des électrovannes de modulation relié en entrée au moyen 19 de détermination de conditions climatiques extrêmes et au moyen 20 de détermination de l'imminence d'un démarrage du groupe motopropulseur. Le moyen 21 de commande des électrovannes de modulation est activé après réception d'un signal de commande de chacun des moyen 19 de détermination de conditions climatiques extrêmes et moyen 20 de détermination de l'imminence d'un démarrage du groupe motopropulseur. Le moyen 21 de commande des électrovannes de modulation est apte à émettre un signal de commande modulé par un rapport cyclique, comprenant un courant d'appel suivi d'un courant de maintien, apte à générer un dégagement d'énergie autour de l'électrovanne de modulation puis à l'actionner afin de dégager également de l'énergie par frottements mécaniques. Le moyen 21 de commande des électrovannes de modulation est également apte à fixer les intensités du courant d'appel et du courant de maintien à un niveau commun.

Enfin, le système de commande 18 comprend un moyen 22 de désactivation apte à déterminer que le groupe motopropulseur est démarré. Lorsque tel est le cas, le moyen 22 de désactivation est apte à désactiver le moyen 21 de commande de l'activation des électrovannes de modulation.

Par ailleurs, le moyen 22 de désactivation est également apte à désactiver le moyen 21 de commande de l'activation des électrovannes de modulation lorsque la durée écoulée depuis le début de l'émission de la commande d'activation des électrovannes de modulation est supérieure à un seuil et que le groupe motopropulseur n'a pas été démarré. Une telle désactivation permet de protéger les électrovannes du grippage.

## Revendications

1. Procédé de commande d'une boite de vitesses automatique de véhicule automobile, comprenant au moins une électrovanne de modulation disposée dans un circuit hydraulique, le procédé comportant les étapes suivantes :
on détermine si une mesure de température au voisinage des électrovannes de modulation est inférieure à un seuil de température, et si le démarrage du groupe motopropulseur du véhicule est imminent,
si tel est le cas, on émet une commande d'activation à destination des électrovannes de modulation apte à générer un dégagement d'énergie autour de l'électrovanne de modulation puis à l'actionner afin de dégager également de l'énergie par frottements mécaniques, puis
on commande l'arrêt de la commande d'activation dès que l'on détermine la mise en route du groupe motopropulseur.

2. Procédé de commande selon la revendication précédente, dans lequel la commande d'activation comprend un courant d'appel suivi d'un courant de maintien, l'intensité du courant de maintien étant égale à l'intensité du courant d'appel.

3. Procédé de commande selon l'une des revendications précédentes, dans lequel on détermine que le démarrage du groupe motopropulseur est imminent en détectant au moins l'un parmi l'ouverture de la portière du conducteur, le déverrouillage de la condamnation centralisée, et la détection de la présence d'un individu installé dans le siège conducteur au moyen de capteurs, tels qu'une cellule photosensible, un capteur volumétrique, un capteur infra rouge, ou un capteur de poids intégré au siège.

4. Procédé de commande selon l'une des revendications précédentes, dans lequel on interrompt la commande d'activation si la durée écoulée depuis l'émission de la commande d'activation des électrovannes de modulation est supérieure à un seuil et que le groupe motopropulseur n'a pas été démarré.

5. Procédé de commande selon l'une des revendications précédentes, dans lequel on détermine la mise en route du groupe motopropulseur en comparant au moins un paramètre de fonctionnement du groupe motopropulseur à un seuil, notamment en comparant la vitesse de rotation du groupe motopropulseur à un seuil

6. Procédé de commande selon l'une des revendications précédentes, dans lequel pour déterminer la température au voisinage des électrovannes de modulation, on mesure la température du liquide hydraulique présent dans le circuit hydraulique ou la température extérieure au véhicule.

7. Système de commande d'une boite de vitesses automatique de véhicule automobile, comprenant au moins une électrovanne de modulation disposée dans un circuit hydraulique, le système comprenant:
un moyen (19) de détermination de conditions climatiques extrêmes, apte à comparer une mesure de température au voisinage des électrovannes de modulation à un seuil,
un moyen (20) de détermination de l'imminence d'un démarrage du groupe motopropulseur du véhicule, apte à déterminer que le groupe motopropulseur va être démarré en fonction d'au moins un signal d'un capteur,
un moyen (21) de commande des électrovannes de modulation relié en entrée au moyen (19) de détermination de conditions climatiques extrêmes et au moyen (20) de détermination de l'imminence d'un démarrage du groupe motopropulseur, apte à émettre un signal de commande modulé par un rapport cyclique, comprenant un courant d'appel suivi d'un courant de maintien, apte à générer un dégagement d'énergie autour de l'électrovanne de modulation puis à l'actionner afin de dégager également de l'énergie par frottements mécaniques, et
un moyen (22) de désactivation apte à déterminer que le groupe motopropulseur est démarré et apte, lorsque tel est le cas, à désactiver le moyen (21) de commande de l'activation des électrovannes de modulation.

8. Système de commande selon la revendication 7, dans lequel le moyen (21) de commande des électrovannes de modulation est également apte à fixer les intensités du courant d'appel et du courant de maintien à un niveau commun.

9. Système de commande selon l'une des revendications 7 ou 8, dans lequel le signal permettant la détermination de l'imminence d'un démarrage du groupe motopropulseur du véhicule est fourni par un capteur d'au moins l'un parmi l'ouverture de la porte du conducteur, le déverrouillage de la condamnation centralisée des portes du véhicule, et la détection de la présence d'un individu installé dans le siège du conducteur,
le capteur permettant de détecter la présence d'un individu installé dans le siège conducteur étant une cellule photosensible, un capteur volumétrique, un capteur infrarouge, ou un capteur de poids intégré au siège.

10. Système de commande selon l'une des revendications 7 à 9, dans lequel le moyen (22) de désactivation est également apte à désactiver le moyen (21) de commande de l'activation des électrovannes de modulation lorsque la durée écoulée depuis le début de l'émission de la commande d'activation des électrovannes de modulation est supérieure à un seuil et que le groupe motopropulseur n'a pas été démarré.

11. Système de commande selon l'une des revendications 7 à 10, dans lequel la température au voisinage des électrovannes de modulation est déterminée par un capteur de température du liquide hydraulique présent dans le circuit hydraulique ou en fonction de la mesure d'un capteur de température extérieure au véhicule.

## Patentansprüche

1. Verfahren zur Steuerung eines Automatikgetriebes eines Kraftfahrzeugs, das mindestens ein in einem Hydraulikkreis angeordnetes Modulationsmagnetventil enthält, wobei das Verfahren die folgenden Schritte aufweist:
es wird festgestellt, ob eine Temperaturmessung in der Nähe der Modulationsmagnetventile niedriger als ein Temperaturschwellwert ist, und ob der Start der Antriebseinheit des Fahrzeugs direkt bevorsteht,
wenn dies der Fall ist, wird eine Aktivierungssteuerung an die Modulationsmagnetventile gesendet, die eine Freisetzung von Energie um das Modulationsmagnetventil herum erzeugen und es dann betätigen kann, um ebenfalls Energie durch mechanische Reibungen freizusetzen, dann das Beenden der Aktivierungssteuerung gesteuert wird, sobald das Einschalten der Antriebseinheit festgestellt wird.

2. Steuerverfahren nach dem vorhergehenden Anspruch,
wobei die Aktivierungssteuerung einen Einschaltstrom gefolgt von einem Haltestrom enthält, wobei die Stärke des Haltestroms gleich der Stärke des Einschaltstroms ist.

3. Steuerverfahren nach einem der vorhergehenden Ansprüche, wobei festgestellt wird, dass der Start der Antriebseinheit direkt bevorsteht, indem mindestens eines von der Öffnung der Fahrertür, der Entriegelung der Zentralverriegelung und der Erfassung der Anwesenheit einer Person auf dem Fahrersitz mittels Sensoren wie einer Fotozelle, einem Volumensensor, einem Infrarotsensor oder einem in den Sitz integrierten Gewichtssensor erfasst wird.

4. Steuerverfahren nach einem der vorhergehenden Ansprüche, wobei die Aktivierungssteuerung unterbrochen wird, wenn die seit dem Senden der Aktivierungssteuerung der Modulationsmagnetventile vergangene Zeit länger ist als ein Schwellwert und die Antriebseinheit nicht gestartet wurde.

5. Steuerverfahren nach einem der vorhergehenden Ansprüche, wobei das Einschalten der Antriebseinheit festgestellt wird, indem mindestens ein Betriebsparameter der Antriebseinheit mit einem Schwellwert verglichen wird, insbesondere, indem die Drehgeschwindigkeit der Antriebseinheit mit einem Schwellwert verglichen wird.

6. Steuerverfahren nach einem der vorhergehenden Ansprüche, wobei zur Feststellung der Temperatur in der Nähe der Modulationsmagnetventile die Temperatur der im Hydraulikkreis vorhandenen Hydraulikflüssigkeit oder die Außentemperatur des Fahrzeugs gemessen wird.

7. Steuersystem eines Kraftfahrzeug-Automatikgetriebes, das mindestens ein in einem Hydraulikkreis angeordnetes Modulationsmagnetventil enthält, wobei das System enthält:
eine Einrichtung (19) zur Feststellung von extremen Wetterbedingungen, die eine Temperaturmessung in der Nähe der Modulationsmagnetventile mit einem Schwellwert vergleichen kann,
eine Einrichtung (20) zur Feststellung des direkten Bevorstehens eines Starts der Antriebseinheit des Fahrzeugs, die abhängig von mindestens einem Signal eines Sensors feststellen kann, dass die Antriebseinheit gestartet werden wird,
eine Einrichtung (21) zur Steuerung der Modulationsmagnetventile, die am Eingang mit der Einrichtung (19) zur Feststellung extremer Wetterbedingungen und mit der Einrichtung (20) zur Feststellung des direkten Bevorstehens eines Starts der Antriebseinheit verbunden ist, die ein von einem Tastverhältnis moduliertes Signal senden kann, die einen Einschaltstrom gefolgt von einem Haltestrom enthält, die eine Freisetzung von Energie um das Modulationsmagnetventil herum erzeugen und es dann betätigen kann, um ebenfalls Energie durch mechanische Reibungen freizusetzen, und
eine Einrichtung (22) zur Deaktivierung, die feststellen kann, dass die Antriebseinheit gestartet ist, und die, wenn dies der Fall ist, die Steuereinrichtung (21) der Aktivierung der Modulationsmagnetventile deaktivieren kann.

8. Steuersystem nach Anspruch 7, wobei die Steuereinrichtung (21) der Modulationsmagnetventile ebenfalls die Stärken des Einschaltstroms und des Haltestroms auf einem gemeinsamen Pegel festlegen kann.

9. Steuersystem nach einem der Ansprüche 7 oder 8,
wobei das die Feststellung des direkten Bevorstehens eines Starts der Antriebseinheit des Fahrzeugs ermöglichende Signal von mindestens einem Sensor der Öffnung der Fahrertür, der Entriegelung der Zentralverriegelung der Türen des Fahrzeugs und der Erfassung der Anwesenheit einer auf dem Fahrersitz befindlichen Person geliefert wird,
wobei der Sensor, der es ermöglicht, die Anwesenheit einer Person auf dem Fahrersitz zu erfassen, eine Fotozelle, ein Volumensensor, ein Infrarotsensor oder ein in den Sitz integrierter Gewichtssensor ist.

10. Steuersystem nach einem der Ansprüche 7 bis 9,
wobei die Deaktivierungseinrichtung (22) ebenfalls die Steuereinrichtung (21) der Aktivierung der Modulationsmagnetventile deaktivieren kann, wenn die seit dem Beginn des Sendens der Aktivierungssteuerung der Modulationsmagnetventile vergangene Zeit länger als ein Schwellwert ist und die Antriebseinheit nicht gestartet wurde.

11. Steuersystem nach einem der Ansprüche 7 bis 10,
wobei die Temperatur in der Nähe der Modulationsmagnetventile von einem Temperatursensor der im Hydraulikkreis vorhandenen Hydraulikflüssigkeit oder abhängig von der Messung eines Sensors der Außentemperatur des Fahrzeugs festgestellt wird.

## Claims

1. Method for controlling an automatic transmission of a motor vehicle, comprising at least one modulation solenoid valve arranged in a hydraulic circuit, the method comprising the following steps:
a determination is made as to whether a temperature measurement in the vicinity of the modulation solenoid valves is below a temperature threshold, and whether the starting of the powertrain of the vehicle is imminent,
if such is the case, an activation command is transmitted to the modulation solenoid valves capable of generating a release of energy around the modulation solenoid valve and then of actuating it in order to also release energy by mechanical frictions, then
the stopping of the activation command is commanded as soon as the starting up of the powertrain is determined.

2. Control method according to the preceding claim, in which the activation command comprises an inrush current followed by a holding current, the intensity of the holding current being equal to the intensity of the inrush current.

3. Control method according to one of the preceding claims, in which a determination is made that the starting of the powertrain is imminent by detecting at least one out of the opening of the door of the driver, the unlocking of the centralized blocking, and the detection of the presence of an individual installed in the driver's seat by means of sensors, such as a photosensitive cell, a volumetric sensor, and infrared sensor, or a weight sensor incorporated in the seat.

4. Control method according to one of the preceding claims, in which the activation command is interrupted if the elapsed time since the transmission of the modulation solenoid valves activation command is above a threshold and the powertrain has not been started.

5. Control method according to one of the preceding claims, in which the starting up of the powertrain is determined by comparing at least one operating parameter of the powertrain to a threshold, in particular by comparing the speed of rotation of the powertrain to a threshold.

6. Control method according to one of the preceding claims, in which, to determine the temperature in the vicinity of the modulation solenoid valves, the temperature of the hydraulic fluid present in the hydraulic circuit or the temperature outside the vehicle is measured.

7. System for controlling an automatic transmission of a motor vehicle, comprising at least one modulation solenoid valve arranged in a hydraulic circuit, the system comprising:
a means (19) for determining extreme climatic conditions, capable of comparing a temperature measurement in the vicinity of the modulation solenoid valves to a threshold,
a means (20) for determining the imminence of a starting of the powertrain of the vehicle, capable of determining that the powertrain will be started as a function of at least one signal from a sensor, a means (21) for controlling the modulation solenoid valves linked at the input to the means (19) for determining extreme climatic conditions and to the means (20) for determining the imminence of a starting of the powertrain, capable of transmitting a control signal modulated by a duty cycle, comprising an inrush current followed by a holding current, capable of generating a release of energy around the modulation solenoid valve then of actuating it in order to also release energy by mechanical frictions, and
a deactivation means (22) capable of determining that the powertrain is started and capable, when such is the case, of deactivating the means (21) for controlling the activation of the modulation solenoid valves.

8. Control system according to Claim 7, in which the means (21) for controlling the modulation solenoid valves is also capable of setting the intensities of the inrush current and of the holding current at a common level.

9. Control system according to one of Claims 7 or 8, in which the signal allowing the determination of the imminence of a starting of the powertrain of the vehicle is supplied by a sensor of at least one out of the opening of the door of the driver, the unlocking of the centralized locking of the doors of the vehicle, and the detection of the presence of an individual installed in the driver's seat, the sensor making it possible to detect the presence of an individual installed in the driver's seat being a photosensitive cell, a volumetric sensor, an infrared sensor, or a weight sensor incorporated in the seat.

10. Control system according to one of Claims 7 to 9, in which the deactivation means (22) is also capable of deactivating the means (21) for controlling the activation of the modulation solenoid valves when the elapsed time since the start of the transmission of the modulation solenoid valves activation command is above a threshold and the powertrain has not been started.

11. Control system according to one of Claims 7 to 10, in which the temperature in the vicinity of the modulation solenoid valves is determined by a sensor of temperature of the hydraulic fluid present in the hydraulic circuit or as a function of the measurement from a sensor of temperature outside the vehicle.
